# EUROPEAN PATENT SPECIFICATION

(11) **EP 2 911 930 B1**
(45) Date of publication and mention of the grant of the patent: **27.02.2019**
(21) Application number: 13786541.6
(22) Date of filing: 23.10.2013
(51) Int. Cl.: B62B 3/18, B62B 5/04, B62B 3/04

(54) **DEVICE FOR ROLLING TRANSPORT OF A LOAD**
VORRICHTUNG FÜR ROLLENDEN TRANSPORT EINER LAST
DISPOSITIF POUR LE TRANSPORT ROULANT D'UNE CHARGE

(30) Priority: 25.10.2012 NL 1039862
(43) Date of publication of application: 02.09.2015
(73) Proprietor: Matador Exploitatie B.V., 5268 AS Helvoirt (NL)
(72) Inventor: BELGERS, Paul Anton Gerard Marie, NL-5263 GP Vught (NL); PEEREBOOM, Kornelis Jan, NL-2082 BS Santpoort Zuid (NL); OTTEN, Edwin Jan, NL-1251 XP Laren (NL)
(74) Representative: Patentwerk B.V.
(86) International application number: PCT/NL2013/050745
(87) International publication number: WO 2014/065662

(56) References cited:
- EP-A1- 0 930 212
- CA-A1- 2 404 372
- FR-A- 909 271
- JP-A- H11 342 846
- US-A1- 2005 258 007
- US-A1- 2007 261 905

## Description

The present invention relates to a device for transporting a load.

For transport of a load it is known to make use of a wheelbarrow. Using a wheelbarrow heavy loads are generally transported by being loaded into the wheelbarrow, lifting the wheelbarrow and subsequently displacing the wheelbarrow in the raised position in rolling manner over a front wheel. This results however in a considerable loading of the person lifting the wheelbarrow. In view of the strict requirements of and enforcement by health and safety inspectorates, there is a need for a wheelbarrow with a lesser load on the user.

In the art several wheelbarrows are described. The European patent application EP 0930212 discloses for instance a single wheel motorized wheelbarrow. Herein, the user still has to lift a part of the weight of the load, when moving the wheelbarrow. This solution is relative complex and less ergonomically optimised.

A further wheelbarrow is proposed in the Canadian patent application CA02404372. This wheelbarrow comprises only two front wheels such that the user still needs to lift part of the load in order to transport the wheelbarrow. Therefor this model is less ergonomically optimised.

Yet another solution is proposed in the Japanese patent application JP-H11342846. This document discloses a wheelbarrow with a load carrying surface that may be tilted by application of a handle. In this solution the user still needs to lift a portion of the load in order to transport the wheelbarrow. Thus, this solution is less ergonomically optimised.

Wheelbarrows which do not need to be lifted during transport are known from the prior art. Such wheelbarrow is e.g. proposed in the American patent application US2007/0261905. Here the wheelbarrow comprises two front wheels and a single hind wheel, where the hind wheel comprises an electrically driven motor in its hub. This solution is relative complex and less ergonomically optimised.

Another solution is proposed in US 2005/0258007. This document describes a wheelbarrow provided with three wheels which may be moved without having to be lifted. The wheelbarrow is also provided with a braking mechanism for braking the movement. The wheelbarrow in this document is also provided with a frame having two push handles, two lifting handles and a push bar according to the preamble of claim 1. While such a wheelbarrow is an improvement compared to a standard wheelbarrow, this wheelbarrow may also result in undesirably heavy loading of the user.

It is therefore the object of the present invention to obviate the above drawbacks, or to provide a suitable alternative for the purpose of rolling transport of a load which has the result, among others, of a reduced loading of a user.

The invention comprises for this purpose a device for transporting a load according to claim 1.

The transporting device according to the invention is provided with at least three wheels, whereby it is not necessary to lift the frame in order to transport the load. This results in a limited loading of the back of the user during displacement of the device. Provided for the purpose of moving the device forward are push handles extending substantially perpendicularly of the support plane defined by the wheels so that they may be gripped in an ergonomic manner by the user, and lifting of the frame is unnecessary. The push handles may be connected via for instance rods to the frame so as to transmit the force exerted on the push handles by the user to the frame.

After a load has been placed on the carrier and the device has been displaced by means of the at least three wheels by pushing against the push handles, the load may be tipped from or out of the carrier by tilting the frame. The frame is provided for this purpose with lifting handles. The lifting handles may be connected via for instance rods to the frame so as to transmit the force exerted by the user on the lifting handles to the frame. The lifting handles may also be used when the frame has to be displaced over a narrow ground surface. A narrow ground surface is a surface part over which only the front wheel may move but which is too narrow for the at least two rear wheels. An example of such a narrow surface is a plank, for instance a plank leading to an elevated or lowered floor. Depending on the position of the frame, the lifting handles and/or the push handles may also be used to raise the front wheel of the device clear of the ground surface. The handles are moved for this purpose in the direction of the ground surface and the frame tilts round the at least two rear wheels, after which the front side, and thereby the front wheel, may move clear of the ground.

It is particularly advantageous however that, for the purpose of tilting the frame so as to move the front wheel clear of the ground (for instance in order to pass smoothly over a threshold or other irregularity in the surface), the frame is also provided with a push bar, which push bar is situated at a distance from the support plane defined by the wheels which is greater than the distance between the lifting handles and the support plane defined by the wheels and which is smaller than the distance between the push handles and the support plane defined by the wheels, and which push bar extends substantially parallel to the support plane defined by the wheels. The push bar is for instance coupled to the rods connecting the push handles to the frame. The push bar provides a relatively wide surface area for the user of the device for the purpose of moving the rear side of the frame in the direction of the ground surface and thereby tilting the frame around the rear wheels of the frame. Particularly the placing of the push bar between the lifting handles and the push handles makes it possible for the user to rest a part of his/her body weight in ergonomic manner on the push bar, whereby lifting of the front wheel requires less effort than lifting the front wheel of a prior art wheelbarrow.

The combined presence of lifting handles, push handles and a push bar allows the best possible ergonomic posture for the user in numerous possible uses of the device, in which the physical load on the user remains limited.

In an embodiment of the present invention the lifting handles transpose on the side remote from the carrier into curved coupling rods. The curvature of the lifting handles has the particular advantage that, when the frame is tipped around the front wheel in order to remove the load from the carrier, the contact between the user and the transporting device may be maintained during the tipping. During tipping of the frame the position of the lifting handles relative to the ground surface may change, whereby a less favourable position for lifting of the frame may be formed. In order to counter this the user may change the position in which he/she is holding the frame by grasping the frame at another location on the curved coupling rods.

In a particular embodiment the curved coupling rods have from the lifting handles a U-shape such that they continue until they run parallel to the lifting handles. Changing the grip on the lifting handles hereby becomes unnecessary during tipping. The user may change the position at which he/she is gripping the frame during tipping, and make use of the whole U-shape in order to tip the frame in the most responsible possible manner.

In another embodiment of the present invention the front wheel has a diameter larger than the diameter of the rear wheels. The rear wheels may have an identical diameter. The front wheel is generally larger since a device will generally often have one front wheel and two rear wheels, and the one front wheel must bear the same load as the two rear wheels.

In an embodiment of the invention the handles are situated on the rear side of the carrier relative to the front wheel. When a user is transporting the device, he/she may hereby see the direction of the device and steer the frame so that the device moves in the desired direction.

In another embodiment the device is also provided with a brake engageable on the front wheel. The brake may block the front wheel. A blocked front wheel is for instance advantageous when the frame is tipped around the front wheel, so that the front wheel remains in place during tipping. A blocked front wheel is also particularly favourable when the device has to be stationary (for instance during loading and unloading) on a sloping surface. During functional use the brake is not in the way of the user.

The brake is for instance a foot brake connected on the side of the rear wheels to the frame. The brake is for instance connected rotatingly to the frame, wherein the user steps on the brake and the part on the side of the front wheel engages through rotation on the front wheel. The brake may then for instance be moved by the user beyond a position with the highest resistance relative to the front wheel, wherein the brake continues to block the front wheel. In order to move the brake back to its rest position in which the front wheel is not blocked, the brake has to be moved in opposite direction. The front wheel may be moved for this purpose in the direction which, because the brake engages on the front wheel, carries the brake beyond the point of highest resistance and returns the brake to the rest position.

In an embodiment of the present invention the carrier is a container. The container may for instance be an open container in order to transport the load in a partially enclosed state, but may also be a closed container when for instance the load has to be protected from the elements. It is also possible to envisage a flat carrier instead of a container, for instance when a heavy or large load or a pallet has to be transported, wherein it is undesirable to have to place the load into and remove it from a carrier.

The container may be made from a plastic, a metal, wood or from the same material from which (a part of) the frame is manufactured.

In an embodiment the carrier is integrated with the frame. Integration of the carrier with the frame imparts extra strength to the carrier and the frame and prevents the carrier and frame being able to detach from each other in undesirable manner.

In an embodiment of the present invention the push handles are located at a distance of [0.50 - 1.25] m and preferably 0.8 m from the support plane defined by the wheels. This distance ensures the best possible ergonomic movement of the device, wherein the user may move the device in the most natural manner possible by pushing against the push handles.

In another embodiment the lifting handles are located at a distance of [0.35 - 1.00] m from the support plane defined by the wheels. The lifting handles are preferably located at a height of 0.65 m from the support plane defined by the wheels in order to allow lifting of the frame to take place in the most ergonomic possible manner, wherein the load on the lower back of the user is limited.

In an embodiment of the present invention a projection of the push bar onto the support plane defined by the wheels lies on the side of the rear wheels remote from the front wheel. This location of the push bar provides a lever when the frame has to be tilted around the rear wheels, so that the force required for tilting is limited.

In an embodiment the device is provided with a longitudinal plane of symmetry. A plane of symmetry ensures that the load to be transported is distributed in a uniform manner over the device, and a well distributed loading of the device takes place.

In another embodiment of the present invention the push bar extends substantially in a direction lying perpendicularly of the direction in which the lifting handles extend. In order to use the device in the most ergonomic possible manner the directions in which the different components extend are adapted to the use thereof.

In an embodiment the transporting device is also provided with an electric drive. In order to further limit the loading of the user, the forward movement of the device may also be facilitated. An electric drive, which for instance drives the rear wheels of the transporting device, may here relieve the loading of the user necessary to move the loaded device. The electric motor may also be an electric motor integrated into the front wheel with operating means located close to at least one of the handles for at least switching the electric motor on and off.

The invention will now be further elucidated with reference to the figures, in which:
- figure 1 shows a device according to the present invention; and
- figure 2 shows a device with foot brake.

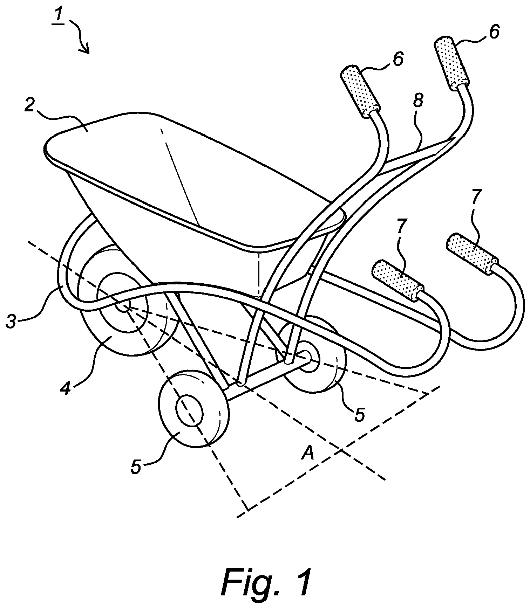

Figure 1 shows a device 1 for transporting a load, comprising a carrier 2 for holding the load to be transported, a frame 3 supporting the carrier, which frame is provided with at least one front wheel 4 and at least two spaced apart rear wheels 5, two push handles 6 connected to frame 3 for pushing transporting device 1; which push handles 6 are situated on the side of the carrier remote from the frame and extend in a direction substantially perpendicularly of the support plane A defined by the wheels, two lifting handles 7 connected to frame 6 for tilting frame 3 around front wheel 4, which lifting handles 7 are situated closer to the support plane A defined by the wheels than the push handles and extend in a direction substantially parallel to the support plane A defined by the wheels; and a push bar 8 connected to frame 3 for tilting frame 3 around rear wheels 5, which push bar 8 is situated at a distance from the support plane A defined by the wheels which is greater than the distance between lifting handles 7 and the support surface A defined by the wheels and smaller than the distance between push handles 6 and the support plane A defined by the wheels, and which push bar 8 extends substantially parallel to the support plane A defined by the wheels.

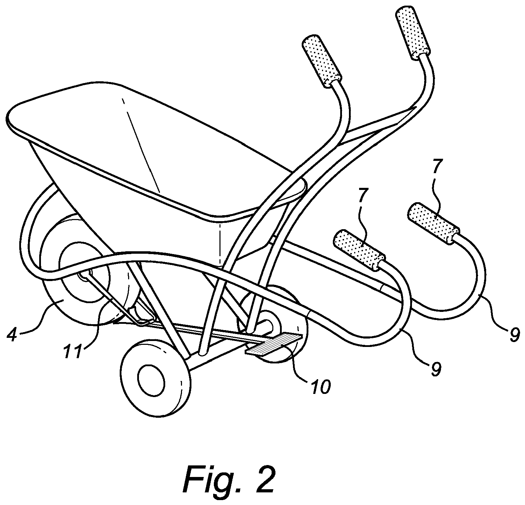

Figure 2 shows a device as in figure 1, wherein lifting handles 7 transpose into curved coupling rods 9, wherein the curved coupling rods 9 have from lifting handles 7 a U-shape such that they continue until they run parallel to lifting handles 7. Figure 2 also shows a brake 10 which may engage on the front wheel. The brake engages on front wheel 4 following rotation about rotation point 11.

## Claims

1. Device (1) for transporting a load, comprising:
- a carrier (2) for holding the load to be transported;
- a frame (3) supporting the carrier; which frame (3) is provided with at least one front wheel (4); and at least two spaced apart rear wheels (5);
- two push handles (6) connected to the frame (3) for pushing the transporting device; which push handles (6) are situated on the side of the carrier (2) remote from the frame (3) and extend in a direction substantially perpendicularly of the support plane (A) defined by the wheels (4,5);
- two lifting handles (7) connected to the frame (3) for tilting the frame (3) around the front wheel (4), which lifting handles (7) are situated closer to the support plane (A) defined by the wheels (4,5) than the push handles (6) and extend in a direction substantially parallel to the support plane (A) defined by the wheels (4,5); and
- a push bar (8) connected to the frame (3) for tilting the frame (3) around the rear wheels (5), which push bar (8) extends substantially parallel to the support plane (A) defined by the wheels (4,5), and which push bar (8) is situated at a distance from the support plane (A) defined by the wheels (4,5) which is greater than the distance between the lifting handles (7) and the support plane (A) defined by the wheels (4,5), **characterized in that** the push bar (8) is situated at a distance from the support plane (A) defined by the wheels (4,5) which is smaller than the distance between the push handles (6) and the support plane (A) defined by the wheels (4,5).

2. Device as claimed in claim 1, **characterized in that** the lifting handles (7) transpose on the side remote from the carrier (3) into curved coupling rods.

3. Device (1) as claimed in claim 2, **characterized in that** the curved coupling rods have from the lifting handles (7) a U-shape such that they continue until they run parallel to the lifting handles (7).

4. Device (1) as claimed in any of the foregoing claims, **characterized in that** the front wheel (4) has a diameter larger than the diameter of the rear wheels (5).

5. Device (1) as claimed in any of the foregoing claims, **characterized in that** the push handles (6) and the lifting handles (7) are situated on the rear side of the carrier (2) relative to the front wheel (4).

6. Device (1) as claimed in any of the foregoing claims, **characterized in that** the device (1) is also provided with a brake (10) engageable on the front wheel (4).

7. Device as claimed in any of the foregoing claims, **characterized in that** the carrier (2) is a container.

8. Device (1) as claimed in any of the foregoing claims, **characterized in that** the carrier (2) is integrated with the frame (3).

9. Device (1) as claimed in any of the foregoing claims, **characterized in that** the push handles (6) are located at a distance of [0.5 - 1.25] m and preferably about 0.8 m from the support plane (A) defined by the wheels (4,5).

10. Device (1) as claimed in any of the foregoing claims, **characterized in that** the lifting handles (7) are located at a distance of [0.35 - 1.00] m and preferably about 0.65 m from the support plane (A) defined by the wheels (4,5).

11. Device (1) as claimed in any of the foregoing claims, **characterized in that** a projection of the push bar (8) onto the support plane (A) defined by the wheels (4,5) lies on the side of the rear wheels (5) remote from the front wheel (4).

12. Device (1) as claimed in any of the foregoing claims, **characterized in that** the device (1) is provided with a longitudinal plane of symmetry.

13. Device (1) as claimed in any of the foregoing claims, **characterized in that** the push bar (8) extends substantially in a direction lying perpendicularly of the direction in which the lifting handles (7) extend.

14. Device (1) as claimed in any of the foregoing claims, **characterized in that** the transporting device (1) is also provided with an electric drive.

## Patentansprüche

1. Vorrichtung (1) für das Transportieren einer Last, Folgendes umfassend:
- einen Träger (2) zum Tragen der zu transportierenden Last;
- einen Rahmen (3) zum Stützen des Trägers; wobei der Rahmen (3) mit mindestens einem Vorderrad (4) ausgestattet ist; und mindestens zwei beabstandeten Hinterrädern (5);
- zwei Schubgriffe (6), die mit dem Rahmen (3) verbunden sind, um die Transportvorrichtung zu schieben; wobei sich die Schubgriffe (6) an der Seite des Trägers (2), vom Rahmen (3) entfernt, befinden und sich in im Wesentlichen senkrechte Richtung der durch die Räder (4, 5) definierten Stützfläche (A) erstrecken;
- zwei Hubgriffe (7), die mit dem Rahmen (3) verbunden sind, um den Rahmen (3) um das Vorderrad (4) zu neigen, wobei sich die Hubgriffe (7) näher an der durch die Räder (4, 5) definierten Stützfläche (A) als die Schubgriffe (6) befinden und sich in im Wesentlichen paralleler Richtung zu der durch die Räder (4, 5) definierten Stützfläche (A) erstrecken; und
- eine mit dem Rahmen (3) verbundene Schubstange (8), um den Rahmen (3) um die Hinterräder (5) zu neigen, wobei sich die Schubstange (8) im Wesentlichen parallel zu der durch die Räder (4, 5) definierten Stützfläche (A) erstreckt und wobei sich die Schubstange (8) in einem Abstand zu der durch die Räder (4, 5) definierten Stützfläche (A) befindet, der größer ist als der Abstand zwischen den Hubgriffen (7) und der durch die Räder (4, 5) definierten Stützfläche (A);
**dadurch gekennzeichnet, dass** sich die Schubstange (8) in einem Abstand zu der durch die Räder (4, 5) definierten Stützfläche (A) befindet, der kleiner ist als der Abstand zwischen den Schubgriffen (6) und der durch die Räder (4, 5) definierten Stützfläche (A).

2. Vorrichtung nach Anspruch 1, **dadurch gekennzeichnet, dass** die Hubgriffe (7) auf der vom Träger (3) entfernten Seite zu Kuppelstangen werden.

3. Vorrichtung (1) nach Anspruch 2, **dadurch gekennzeichnet, dass** die gekrümmten Kuppelstangen nach den Hubgriffen (7) U-förmig sind, sodass sie sich weiter erstrecken bis sie parallel zu den Hubgriffen (7) verlaufen.

4. Vorrichtung (1) nach einem der vorstehenden Ansprüche, **dadurch gekennzeichnet, dass** das Vorderrad (4) einen größeren Durchmesser als die Hinterräder (5) aufweist.

5. Vorrichtung (1) nach einem der vorstehenden Ansprüche, **dadurch gekennzeichnet, dass** sich die Schubgriffe (6) und die Hubgriffe (7) in Bezug zu dem Vorderrad (4) auf der Rückseite des Trägers (2) befinden.

6. Vorrichtung (1) nach einem der vorstehenden Ansprüche, **dadurch gekennzeichnet, dass** die Vorrichtung (1) außerdem mit einer Bremse (10) ausgestattet ist, die auf das Vorderrad (4) wirken kann.

7. Vorrichtung nach einem der vorstehenden Ansprüche, **dadurch gekennzeichnet, dass** der Träger (2) ein Behälter ist.

8. Vorrichtung (1) nach einem der vorstehenden Ansprüche, **dadurch gekennzeichnet, dass** der Träger (2) in den Rahmen (3) integriert ist.

9. Vorrichtung (1) nach einem der vorstehenden Ansprüche, **dadurch gekennzeichnet, dass** sich die Schubgriffe (6) in einem Abstand von [0,5-1,25] m und bevorzugt etwa 0,8 m zu der durch die Räder (4, 5) definierten Stützfläche (A) befinden.

10. Vorrichtung (1) nach einem der vorstehenden Ansprüche, **dadurch gekennzeichnet, dass** sich die Hubgriffe (7) in einem Abstand von [0,35-1,00] m und bevorzugt etwa 0,65 m zu der durch die Räder (4, 5) definierten Stützfläche (A) befinden.

11. Vorrichtung (1) nach einem der vorstehenden Ansprüche, **dadurch gekennzeichnet, dass** eine Auskragung der Schubstange (8) auf die durch die Räder (4, 5) definierte Stützfläche (A) auf der Seite der Hinterräder (5), entfernt vom Vorderrad (4) liegt.

12. Vorrichtung (1) nach einem der vorstehenden Ansprüche, **dadurch gekennzeichnet, dass** die Vorrichtung (1) mit einer Längssymmetriebene ausgestattet ist.

13. Vorrichtung (1) nach einem der vorstehenden Ansprüche, **dadurch gekennzeichnet, dass** sich die Schubstange (8) in eine Richtung erstreckt, die senkrecht zu der Richtung ist, in die sich die Hubgriffe (7) erstrecken.

14. Vorrichtung (1) nach einem der vorstehenden Ansprüche, **dadurch gekennzeichnet, dass** die Transportvorrichtung (1) außerdem mit einem Elektroantrieb ausgestattet ist.

## Revendications

1. Dispositif (1) servant à transporter une charge, comprenant :
- un support (2) servant à contenir la charge à transporter ;
- un châssis (3) supportant le support ; lequel châssis (3) est doté d'au moins une roue avant (4) ; et d'au moins deux roues arrière (5) espacées les unes des autres ;
- deux poignées de poussée (6) reliées au châssis (3) pour pousser le dispositif de transport ; lesquelles poignées de poussée (6) sont situées sur le côté du support (2) éloigné du châssis (3) et s'étendent dans une direction sensiblement perpendiculaire au plan de support (A) défini par les roues (4, 5) ;
- deux poignées de levage (7) reliées au châssis (3) pour incliner le châssis (3) autour de la roue avant (4), lesquelles poignées de levage (7) sont situées plus près du plan de support (A) défini par les roues (4, 5) que les poignées de poussée (6) et s'étendent dans une direction sensiblement parallèle au plan de support (A) défini par les roues (4, 5) ; et
- une barre de poussée (8) reliée au châssis (3) pour incliner le châssis (3) autour des roues arrière (5), laquelle barre de poussée (8) s'étend sensiblement parallèlement au plan de support (A) défini par les roues (4, 5), et laquelle barre de poussée (8) est située à une distance du plan de support (A) défini par les roues (4, 5) qui est supérieure à la distance entre les poignées de levage (7) et le plan de support (A) défini par les roues (4, 5), **caractérisé en ce que** la barre de poussée (8) est située à une distance du plan de support (A) défini par les roues (4, 5) qui est inférieure à la distance entre les poignées de poussée (6) et le plan de support (A) défini par les roues (4, 5).

2. Dispositif selon la revendication 1, **caractérisé en ce que** les poignées de levage (7) se changent, sur le côté éloigné du support (3), en tiges d'accouplement incurvées.

3. Dispositif (1) selon la revendication 2, **caractérisé en ce que** les tiges d'accouplement incurvées ont, à partir des poignées de levage (7), une forme en U de telle sorte qu'elles se prolongent jusqu'à ce qu'elles s'étendent parallèlement aux poignées de levage (7).

4. Dispositif (1) selon l'une quelconque des revendications précédentes, **caractérisé en ce que** la roue avant (4) a un diamètre supérieur au diamètre des roues arrière (5).

5. Dispositif (1) selon l'une quelconque des revendications précédentes, **caractérisé en ce que** les poignées de poussée (6) et les poignées de levage (7) sont situées sur le côté arrière du support (2) par rapport à la roue avant (4).

6. Dispositif (1) selon l'une quelconque des revendications précédentes, **caractérisé en ce que** le dispositif (1) est également doté d'un frein (10) pouvant être mis en prise sur la roue avant (4).

7. Dispositif selon l'une quelconque des revendications précédentes, **caractérisé en ce que** le support (2) est un contenant.

8. Dispositif (1) selon l'une quelconque des revendications précédentes, **caractérisé en ce que** le support (2) est intégré au châssis (3).

9. Dispositif (1) selon l'une quelconque des revendications précédentes, **caractérisé en ce que** les poignées de poussée (6) sont situées à une distance de [0,5 - 1,25] m et de préférence d'environ 0,8 m du plan de support (A) défini par les roues (4, 5).

10. Dispositif (1) selon l'une quelconque des revendications précédentes, **caractérisé en ce que** les poignées de levage (7) sont situées à une distance de [0,35 - 1,00] m et de préférence d'environ 0,65 m du plan de support (A) défini par les roues (4, 5).

11. Dispositif (1) selon l'une quelconque des revendications précédentes, **caractérisé en ce qu'**une projection de la barre de poussée (8) sur le plan de support (A) défini par les roues (4, 5) se situe sur le côté des roues arrière (5) éloigné de la roue avant (4).

12. Dispositif (1) selon l'une quelconque des revendications précédentes, **caractérisé en ce que** le dispositif (1) présente un plan de symétrie longitudinal.

13. Dispositif (1) selon l'une quelconque des revendications précédentes, **caractérisé en ce que** la barre de poussée (8) s'étend sensiblement dans une direction située perpendiculairement à la direction dans laquelle les poignées de levage (7) s'étendent.

14. Dispositif (1) selon l'une quelconque des revendications précédentes, **caractérisé en ce que** le dispositif de transport (1) est également doté d'un entraînement électrique.
